# EUROPÄISCHE PATENTANMELDUNG

(11) **EP 3 916 869 A1**
(43) Veröffentlichungstag der Anmeldung: **01.12.2021**
(21) Anmeldenummer: 20196526.6
(22) Anmeldetag: 16.09.2020
(51) Int. Cl.: H01M 10/052, H01M 10/0583, H01M 10/0587, H01M 50/107, H01M 50/559, H01M 10/0525

(54) **LITHIUM-IONEN-ZELLE MIT HOHER SPEZIFISCHER ENERGIEDICHTE**

(30) Priorität: 29.05.2020 EP 20177371; 11.08.2020 EP 20190528
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Patentanwaltskanzlei Cartagena

(57) **Zusammenfassung**

Bekannt ist eine sekundäre Lithium-Ionen-Zelle (100), die einen bandförmigen Elektroden-Separator-Verbund (104) mit der Sequenz Anode (120) / Separator (118) / Kathode (130) umfasst. Die Anode (120) und die Kathode (130) umfassen jeweils einen bandförmigen Stromkollektor (115,125) mit einem ersten Längsrand (115a, 125a) und einem zweiten Längsrand und sind jeweils in einem streifenförmigen Hauptbereich (122, 116) mit einem Elektrodenmaterial (155, 123) beladen, wobei sich jeweils ein freier, nicht mit Elektrodenmaterial beladener Randstreifen (121, 117) entlang des ersten Längsrands (115a, 125a) erstreckt. Der Elektroden-Separator-Verbund (104) liegt in Form eines Wickels mit zwei endständigen Stirnseiten vor und ist von einem Gehäuse umschlossen. Die Anode (120) und die Kathode (130) sind derart ausgebildet und/oder innerhalb des Elektroden-Separator-Verbunds (104) zueinander angeordnet, dass der erste Längsrand (115a) aus einer der endständigen Stirnseiten und der erste Längsrand (125a) aus der anderen der endständigen Stirnseiten austritt. Die Zelle umfasst ein metallisches Kontaktelement (101a, 102, 155), das mit einem der ersten Längsränder (115a, 125a) in unmittelbarem Kontakt steht. Das Kontaktelement (111) ist mit diesem Längsrand (115a, 125a) durch Verschweißung verbunden.

Es wird vorgeschlagen, dass die Schicht aus dem negativen Elektrodenmaterial (155) metallisches Lithium umfasst.

## Beschreibung

### ANWENDUNGSGEBIET UND STAND DER TECHNIK

Die nachstehend beschriebene Erfindung betrifft eine sekundäre Lithium-Ionen-Zelle.

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithium-Metalloxide wie Lithiumcobaltoxid (LiCoO₂) und Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode/ Separator / positive Elektrode/ Separator / negative Elektrode oder positive Elektrode / Separator/ negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate, elektrisch leitende, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einerweiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

Sehr hohe Energiedichten können insbesondere bei einem Einsatz von Zinn, Aluminium, Antimon und/oder Silizium als Aktivmaterial in negativen Elektroden erzielt werden. Silizium besitzt eine maximale Kapazität von mehr als 3500 mAh/g. Das ist rund zehn mal mehr als die spezifische Kapazität von Graphit. In der Praxis ist der Einsatz von Elektrodenmaterialien mit hohen Anteilen an den genannten metallischen Aktivmaterialien allerdings mit Schwierigkeiten verbunden. Partikel aus diesen Materialien unterliegen beim Laden und Entladen vergleichsweise starken Volumenänderungen. Hieraus resultieren mechanische Belastungen und gegebenenfalls auch mechanische Beschädigungen. So sind beispielsweise Anteile von mehr als 10 % Silizium in negativen Elektroden bislang nur schwer beherrschbar.

### AUFGABE UND LÖSUNG

Der vorliegenden Erfindung lag die Aufgabe zugrunde, Lithium-Ionen-Zellen bereitzustellen, die sich durch eine gegenüber dem Stand der Technik verbesserte Energiedichte auszeichnen und die gleichzeitig hervorragende Charakteristiken bezüglich ihres Innenwiderstands und ihrer passiven Entwärmungsfähigkeiten besitzen.

Diese Aufgabe wird durch die Lithium-Ionen-Zelle mit den Merkmalen des Anspruchs 1 gelöst. Bevorzugte Ausgestaltungen der Zelle ergeben sich aus den abhängigen Ansprüchen.

Die erfindungsgemäße sekundäre Lithium-Ionen-Zelle weist stets die unmittelbar folgenden Merkmale a. bis j. auf:
a. Die Zelle umfasst einen bandförmigen Elektroden-Separator-Verbund mit der Sequenz Anode / Separator / Kathode.
b. Die Anode umfasst einen bandförmigen Anodenstromkollektor mit einem ersten Längsrand und einem zweiten Längsrand.
c. Der Anodenstromkollektorweist einen streifenförmigen Hauptbereich, der mit einer Schicht aus negativem Elektrodenmaterial beladen ist, sowie einen freien Randstreifen, dersich entlang des ersten Längsrands erstreckt und der nicht mit dem Elektrodenmaterial beladen ist, auf.
d. Die Kathode umfasst einen bandförmigen Kathodenstromkollektor mit einem ersten Längsrand und einem zweiten Längsrand.
e. Der Kathodenstromkollektor weist einen streifenförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist, auf.
f. Der Elektroden-Separator-Verbund liegt in Form eines Wickels mit zwei endständigen Stirnseiten vor.
g. Die Elektroden-Separator-Verbund ist von einem Gehäuse umschlossen.
h. Die Anode und die Kathode sind derart ausgebildet und/oder innerhalb des Elektroden-Separator-Verbunds zueinander angeordnet, dass der erste Längsrand des Anodenstromkollektors aus einer der endständigen Stirnseiten und der erste Längsrand des Kathodenstromkollektors aus der anderen der endständigen Stirnseiten austritt.
i. Die Zelle weist ein metallisches Kontaktelement auf, das mit einem der ersten Längsränder in unmittelbarem Kontakt steht.
j. Das Kontaktelement ist mit diesem Längsrand durch Verschweißung verbunden.

### Erfindungsgemäße Lösung

Die erfindungsgemäße Zelle zeichnet sich besonders durch das folgende Merkmal aus:
k. Die Schicht aus dem negativen Elektrodenmaterial umfasst metallisches Lithium.

Während hochkapazitive Kathoden Lithium reversibel im Bereich von 200 - 250 mAh/g speichern können, liegt die theoretische Kapazität von metallischem Lithium bei ca. 3842 mAh/g. Dies ermöglicht die Herstellung von Zellen mit sehr dünnen Anoden. Kathodenseitig ist zwar im Gegenzug eine vergleichsweise hohe Flächenbeladung erforderlich. Insgesamt lässt sich so die Energiedichte jedoch erheblich steigern.

### Bevorzugte strukturelle Eigenschaften der Anode

Die Anode kann in einigen bevorzugten Ausführungsformen als dünne Schicht aus metallischem Lithium vorliegen. Diese Schicht kann beispielsweise mittels eines CVD- oder PVD-Verfahrens (CVD = Chemical Vapour Deposition, PVD = Physical Vapour Deposition) aus der Gasphase auf dem Anodenstromkollektor abgeschieden werden.

Besonders bevorzugt zeichnet sich die erfindungsgemäße Zelle allerdings durch mindestens eines der zwei unmittelbar folgenden zusätzlichen Merkmale a. und b. aus:
a. Die Schicht aus dem negativen Elektrodenmaterial umfasst eine poröse, elektrisch leitfähige Matrix mit offenporiger Struktur.
b. In die Poren der Matrix ist das metallische Lithium eingelagert.

Besonders bevorzugt sind die unmittelbar vorstehenden zusätzlichen Merkmale a. und b. in Kombination realisiert.

Gegebenenfalls kann die Anode neben dem metallischen Lithium noch mindestens ein weiteres Material umfassen, beispielsweise mindestens ein Metall, mit dem das Lithium legiert ist. Gegebenenfalls ist das mindestens eine weitere Material gleichfalls in die Poren der Matrix eingelagert.

Ein Problem, das der Marktfähigkeit von Zellen mit metallischer Lithiumanode bislang entgegenstand, resultiert daraus, dass solche Anoden bei einer vollständigen Entladung restlos abgebaut werden. Das Volumen der Anoden kann beim Entladen also gegen Null gehen. Hieraus können, wie im Fall von Silizium als Aktivmaterial, massive Volumenänderungen innerhalb der Zelle resultieren, die sich beim Laden in umgekehrter Richtung wiederholen. Das Problem ist insbesondere dann kritisch, wenn die Zellen einen Aufbau aufweisen, bei dem mehrere schichtförmige Anoden und Kathoden in alternierender Abfolge gestapelt vorliegen. In diesem Fall addieren sich die jeweiligen Volumenänderungen.

Ein weiteres Problem, das bei Zellen mit metallischer Lithiumanode auftreten kann, ist, dass sich das metallische Lithium beim Laden anodenseitig ungleichmäßig aufbaut, es im Extremfall sogar zur Bildungvon Dendriten kommen kann.

Die elektrisch leitfähige Matrix mit der offenporigen Struktur gewährleistet, dass bei Lade- und Entladevorgängen anodenseitig auftretende Volumenänderungen minimiert werden. Ausgehend von einem geladenen Zustand, in dem sich das Lithium zumindest überwiegend, gegebenenfalls auch vollständig, in den Poren der Zelle befindet, wird das Lithium beim Entladen in der Anode abgebaut. Anders als bei aus dem Stand der Technik bekannten Zellen mit metallischer Lithiumanode geht der Anode hierbei aber nahezu kein Volumen verloren, denn dieses wird maßgeblich durch die Matrix bestimmt. Beim Laden kann sich das Lithium, bedingt durch die elektrische Leitfähigkeit der Matrix, dann wiedergleichmäßig in der Anode abscheiden. Ungleichmäßige Lithiumabscheidungen und damit verbundene lokale Volumenzuwächse oder gar Dendritenbildung können so vermieden werden. Zudem wird in Kombination mit der Anbindung des einen der ersten Längsrander über das Kontaktelement Spannungs- und Temperaturgradienten minimiert.

Von großer Bedeutung für die Erfindung ist die offenporige Struktur der Matrix. Unter einer offenporigen Struktur versteht man bekanntlich eine Struktur, die eine Vielzahl von Poren aufweist, die untereinander durch Kanäle oder Durchbrechungen der Porenwände miteinander verbunden sind. In Folge dessen weisen offenporige Strukturen in aller Regel eine große innere Oberfläche auf.

In einer bevorzugten Weiterbildung sich die erfindungsgemäße Zelle durch mindestens eines der zwei unmittelbar folgenden zusätzlichen Merkmale a. und b. aus:
a. Die Matrix weist eine Porosität im Bereich von 40 bis 95 % auf.
b. Die Poren in der Matrix zeichnen sich durch einen mittleren Durchmesser im Bereich von 2 bis 50 µm aus.

Besonders bevorzugt sind die unmittelbar vorstehenden zusätzlichen Merkmale a. und b. in Kombination realisiert.

Die Bestimmung von Porositäten (Verhältnis von Volumen der Poren / Gesamtvolumen der Matrix) und Porengrößenverteilungen ist heute keine Hürde mehr. Es gibt zahlreiche Messgeräte, die entsprechende Bestimmungen nach standardisierten Verfahren durchführen. Obige Werte beziehen sich auf Bestimmungen nach den Normen ISO 15901-1 und DIN 66133.

In möglichen Weiterbildungen des unmittelbar vorstehenden Merkmals a. weist die Matrix bevorzugt eine Porosität im Bereich von 50 % bis 95 %, besonders bevorzugt von 70 % bis 95 %, insbesondere von 80 % bis 95 %, auf.

In möglichen Weiterbildungen des unmittelbar vorstehenden Merkmals b. weisen die Poren in der Matrix bevorzugt einen mittleren Durchmesser im Bereich von 7,5 bis 150 µm, besonders bevorzugt von 9 bis 130 µm, insbesondere von 10 bis 120 µm. auf.

Die Poren in der Matrix sind besonders bevorzugt durch Durchlässe verbunden, die einen mittleren Durchmesser im Bereich von 0,5 µm und 50 µm, besonders bevorzugt im Bereich von 1 bis 40 µm, insbesondere im Bereich von 1 bis 25 µm, ganz besonders bevorzugt von 1 bis 10 µm, aufweist.

Idealerweise besteht die Matrix aus einem Material, das sich beim Laden und Entladen der Zelle chemisch nicht verändert.

In einer bevorzugten Weiterbildung zeichnet sich die erfindungsgemäße Zelle durch mindestens eines der vier unmittelbar folgenden zusätzlichen Merkmale a. bis d. aus:
a. Die Matrix umfasst Kohlenstoff, der durch Carbonisierung einer organischen Verbindung gebildet wurde.
b. Die Matrix umfasst den Kohlenstoff in einem Anteil im Bereich von 50 bis 100 Gew-%.
c. Die Matrix enthält neben dem Kohlenstoff mindestens einen Füllstoff, der eine höhere oder eine niedrigere elektrische Leitfähigkeit als der Kohlenstoff aufweist.
d. Die Bei dem Füllstoff handelt es sich um mindestens ein Mitglied aus der Gruppe mit Ruß, CNT, Graphen und Metallpartikel.

Bevorzugtsind die unmittelbar vorstehenden zusätzlichen Merkmale a. und b., besonders bevorzugt die unmittelbar vorstehenden zusätzlichen Merkmale a. bis d., in Kombination realisiert.

Geeignete Varianten von carbonisierbaren organischen Verbindungen und auch von Verfahren zur Carbonisierung sind in der EP 2 669 260 A1, der WO 2017/086609 A1 und der US 5510212 A beschrieben, deren Inhalt hiermit durch Bezugnahme vollumfänglich zum Inhalt der vorliegenden Beschreibung gemacht wird.

Ganz besonders bevorzugt, geht man bei der Herstellung der porösen, elektrisch leitfähigen Matrix mit offenporiger Struktur von einer porösen organischen Verbindung, insbesondere von einem Polymer mit einer porösen Struktur, aus.

Die Bildung dieser porösen organischen Verbindung, insbesondere des Polymers mit der porösen Struktur, kann gemäß der EP 2 669 260 A1 beispielsweise erfolgen, indem die Monomerphase einer Monomer-Wasser-Emulsion polymerisiert wird, beispielsweise durch Ringöffnungsmetathese-Polymerisation (Ring-Opening Metathesis Polymerisation, ROMP) einer hierfürzugänglichen Dienverbindung. Beim Polymerisieren werden Wassertropfen eingeschlossen. Nach einer anschließenden Entfernung des Wassers verbleiben an deren Stelle Hohlräume. Die entstandene polymere Matrix mit diesen Hohlräumen kann in einem Folgeschritt carbonisiert werden, wobei ggf. noch Zwischenschritte wie eine oxidative Behandlung erforderlich sein können.

Unter Carbonisierung ist hierbei im Übrigen eine Umwandlung einer organischen Verbindung zu nahezu reinem Kohlenstoff zu verstehen. Eine solche Umwandlung erfolgt in der Regel bei sehr hohen Temperaturen und unter Sauerstoffausschluss. Beispielsweise kann ein PolymerzurCarbonisierung auf eine Temperatur im Bereich von 550 °C bis 2500 °C, vorzugsweise in einer sauerstofffreien Atmosphäre, erhitzt werden.

Die Eigenschaften der Matrix, insbesondere auch ihre Porengröße, können gemäß der EP 2 669 260 A1 im Übrigen gezielt eingestellt werden. Hierzu kann man der Monomer-in-Wasser-Emulsion unterschiedliche Mengen eines Tensids zusetzen. Bevorzugt wird der Volumenanteil des Tensids im Bereich von 0,1 % bis 8 % (basierend auf der Menge des polymerisierbaren Monomers in der Emulsion) variiert.

Durch den Füllstoff gemäß Merkmal c. kann die elektrische Leitfähigkeit der Matrix gezielt erhöht oder abgesenkt werden. Zum Einbringen des Füllstoffs kann dieser beispielsweise der erwähnten Monomer-in-Wasser-Emulsion zugesetzt werden.

Bevorzugt umfasst die Matrix den mindestens einen Füllstoff in einem Anteil im Bereich von 0,1 bis 30 Gew.-%.

In einer bevorzugten Weiterbildung zeichnet sich die erfindungsgemäße Zelle durch das unmittelbar folgende zusätzliche Merkmal a. aus:
a. Die Schicht aus dem negativen Elektrodenmaterial auf dem Anodenstromkollektor weist eine Dicke im Bereich von 5 bis 100 µm auf.

Das metallische Lithium kann beispielsweise mittels elektrochemischer Abscheidung in die Poren der Matrix eingebracht werden. Hierzu kann die Matrix mit einer Lithiumsalzlösung kontaktiert und mit dem negativen Pol einer Gleichspannungsquelle verbunden werden. Alternativ kann auch kathodenseitig ein Lithiumionen enthaltendes Kathodenmaterial, beispielsweise ein NMC-Material, eingesetzt werden. Die elektrochemische Abscheidung des metallischen Lithiums in den Poren der Matrix erfolgt dann beim ersten Laden. Eine weitere Möglichkeit wäre eine Abscheidung des Lithiums mittels CVD oder PVD.

### Bevorzugter kathodenseitiger Aufbau

Für die positive Elektrode einer erfindungsgemäßen Zelle kommen als Aktivmaterialien beispielsweise Lithium-Metalloxid-Verbindungen und Lithium-Metallphosphat-Verbindungen wie LiCoO₂ und LiFePO₄ in Frage. Insbesondere sind auch Derivate von LiFePO₄ von Interesse, bei denen Fe teilweise durch Co, Ni oder Mn ersetzt ist. Weiterhin gut geeignet sind insbesondere Lithiumnickelmangancobaltoxid (NMC) mit der Summenformel LiNiₓMn_{y}CO_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Die genannten kathodischen Aktivmaterialien werden bevorzugt partikulär eingesetzt.

In einer besonders bevorzugten Ausführungsform zeichnet sich die Kathode der erfindungsgemäßen Zelle entsprechend durch mindestens eines der unmittelbar folgenden zusätzlichen Merkmale a. bis e. aus:
a. Das positive Elektrodenmaterial umfasst als Aktivmaterial mindestens eine zur reversiblen Ein- und Auslagerung von Lithium befähigte Metalloxidverbindung, bevorzugt eine oxidische Cobalt- und/oder Manganverbindung, besonders bevorzugt NMC, NCA oder NMCA.
b. Die mindestens eine zur reversiblen Ein- und Auslagerung von Lithium befähigte Metalloxidverbindung ist in dem Elektrodenmaterial in einem Anteil von 80 Gew.-% bis 99 Gew.-% enthalten.
c. Das positive Elektrodenmaterial umfasst einen Elektrodenbinder und/oder ein Leitmittel.
d. Der Elektrodenbinder ist in dem positiven Elektrodenmaterial in einem Anteil von 0,5 Gew.-% bis 15 Gew.-%, bevorzugt von 0,5 Gew.-% bis 5 Gew.-%, enthalten.
e. Das Leitmittel ist in dem positiven Elektrodenmaterial in einem Anteil von 0,1 Gew.-% bis 15 Gew.-%, bevorzugt von 0,5 Gew.-% bis 3,5 Gew.-%, enthalten.

Bevorzugt sind die unmittelbar vorstehenden zusätzlichen Merkmale a. bis e. in Kombination realisiert.

Die Aktivmaterialien der Kathode sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

In einer weiteren besonders bevorzugten Ausführungsform zeichnet sich die Kathode der erfindungsgemäßen Zelle durch mindestens eines der unmittelbar folgenden zusätzlichen Merkmale a. bis e. aus:
a. Die Schicht aus dem positiven Elektrodenmaterial umfasst eine poröse, elektrisch leitfähige Matrix mit offenporiger Struktur.
b. In diese Matrix ist Schwefel eingelagert.

Bevorzugt sind die unmittelbar vorstehenden zusätzlichen Merkmale a. und b. in Kombination realisiert.

Bei der Kathode der erfindungsgemäßen Zelle handelt es sich also in bevorzugten Ausführungsformen um eine Kathode, die Schwefel als Aktivmaterial enthält. Die Zelle gemäß der Erfindung kann also eine Lithium-Schwefel-Zelle sein. Beispielsweise kann die Kathode eine Mischung aus Schwefel mit einem Zusatz zur Verbesserung der elektrischen Leitfähigkeit, beispielsweise aus der Gruppe mit Graphit, Ruß, CNT und Graphen, umfassen. Alternativ kann die Kathode den Schwefel aber auch in chemisch modifizierter Form umfassen, beispielsweise als Polysulfid.

### Separator

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand sowie zwei Enden aufweisen.

Bevorzugt werden die Separatoren aus elektrisch isolierenden Kunststofffolien gebildet. Es ist bevorzugt, dass die Separatoren von einem flüssigen Elektrolyten durchdrungen werden können. Zu diesem Zweck können die verwendeten Kunststofffolien beispielsweise Poren aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Alternativ zu einer Separator-Flüssigelektrolyt-Kombination kann die Zelle allerdings beispielsweise auch einen Festkörperelektrolyt aufweisen.

Bei dem Festkörperelektrolyt handelt es sich bevorzugt um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) gelöst vorliegen.

Wenn es sich bei der Zelle um eine Lithium-Schwefel-Zelle handelt, kann der Separator eine Schutzschicht aufweisen, die die Anode vor dem Elektrolyten und gegebenenfalls darin gelösten Lithiumsulfiden schützt. Diese Schutzschicht kann beispielsweise kathodenseitig auf den Separator aufgebracht sein.

### Elektrolyt

Inn den meisten Fällen ist es bevorzugt, dass die Zelle einen flüssigen Elektrolyten umfasst, welcher aus einem Lösemittel oder Lösemittelgemisch und einem lithiumionenhaltigen Leitsalz besteht und mit dem der Separator getränkt ist. Als Leitsalz kommen beispielsweise LiTFSI oder LiPF₆ oder LiBF4 in Frage. Als Lösemittel sind beispielsweise organische Carbonate, insbesondere Ethylencarbonat (EC), Propylencarbonat (PC), 1,2-Dimethoxyethan (DME), Ethylmethylcarbonat (EMC), Dimethylcarbonat (DMC) oder Diethylcarbonat (DEC) sowie deren Mischungen geeignet.

Wenn es sich bei der erfindungsgemäßen Zelle um eine Lithium-Schwefel-Zelle handelt, kann als Lösemittel beispielsweise eine Mischung aus Dioxolan (DOL) und aus DME verwendet werden. Darüber hinaus kann der Elektrolyt ein Passivierungsadditiv wie Lithiumnitrat (LiNO₃) enthalten.

In einer ersten, besonders bevorzugten Variante zeichnet sich die erfindungsgemäße Zelle hinsichtlich des Elektrolyten durch mindestens eines der vier unmittelbar folgenden zusätzlichen Merkmale a. bis d. aus:
a. Die Zelle umfasst einen Elektrolyten, der eine Mischung aus Tetrahydrofuran (THF) und 2-Methyltetrahydrofuran (mTHF) umfasst.
b. Das Volumenverhältnis von THF : zu mTHF in der Mischung liegt im Bereich von 2 : 1 bis 1 : 2, besonders bevorzugt beträgt es 1 : 1.
c. Die Zelle umfassteinen Elektrolyten, der Lithiumhexafluorophosphat (LiPF6) als Leitsalz umfasst.
d. Das Leitsalz in einem Anteil von 1,5 bis 2,5 M, insbesondere von 2 M, in dem Elektrolyten enthalten.

Besonders bevorzugt sind die vier unmittelbar vorstehenden Merkmale a. bis d. in Kombination miteinander realisiert.

In einer zweiten, besonders bevorzugten Variante zeichnet sich die erfindungsgemäße Zelle hinsichtlich des Elektrolyten durch mindestens eines der sechs unmittelbar folgenden zusätzlichen Merkmale a. bis f. aus:
a. Die Zelle umfasst einen Elektrolyten, der eine Mischung aus Ethylencarbonat (EC) und Dimethylcarbonat (DMC) umfasst.
b. Das Volumenverhältnis von EC : zu DMC in der Mischung liegt im Bereich von 1 : 7 bis 5 : 7, besonders bevorzugt beträgt es 3 : 7.
c. Die Zelle umfasst einen Elektrolyten, der LiPF6 als Leitsalz umfasst.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

Besonders bevorzugt sind die sechs unmittelbar vorstehenden Merkmale a. bis f. in Kombination miteinander realisiert.

In einer dritten, besonders bevorzugten Variante zeichnet sich die erfindungsgemäße Zelle hinsichtlich des Elektrolyten durch mindestens eines der sechs unmittelbar folgenden zusätzlichen Merkmale a. bis f. aus:
a. Die Zelle umfasst einen Elektrolyten, der eine Mischung aus Ethylencarbonat (EC), Dimethylcarbonat (DMC) und Methylacetat (MA) umfasst.
b. Der Volumenanteil von EC und MA in der Mischung liegt jeweils im Bereich von 20 Vol.-% bis 40 Vol.-% und der Volumenanteil an DMC in der Mischung liegt im Bereich von 30 Vol.-% bis 50 Vol.-%.
c. Die Zelle umfasst einen Elektrolyten, der LiPF6 als Leitsalz umfasst.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

Besonders bevorzugt sind die sechs unmittelbar vorstehenden Merkmale a. bis f. in Kombination miteinander realisiert.

In einer vierten, besonders bevorzugten Variante zeichnet sich die erfindungsgemäße Zelle hinsichtlich des Elektrolyten durch mindestens eines der vier unmittelbar folgenden zusätzlichen Merkmale a. bis d. aus:
a. Die Zelle umfasst einen Elektrolyten, der eine Mischung aus 1,3-Dioxolan (DOL) und Dimethoxyethan (DME) umfasst.
b. Das Volumenverhältnis von DOL : zu DME in der Mischung liegt im Bereich von 2 : 1 bis 1 : 2, besonders bevorzugt beträgt es 1 : 1.
c. Die Zelle umfasst einen Elektrolyten, der Lithium-bis-(trifluoromethan)sulfonylimid (LiTFSI) als Leitsalz umfasst.
d. Das Leitsalz ist in einer Konzentration von 0,5 bis 2,0 M, insbesondere von 1 M, in dem Elektrolyten enthalten.

Besonders bevorzugt sind die vier unmittelbar vorstehenden Merkmale a. bis d. in Kombination miteinander realisiert.

In einer fünften, besonders bevorzugten Variante zeichnet sich die erfindungsgemäße Zelle hinsichtlich des Elektrolyten durch mindestens eines der vier unmittelbar folgenden zusätzlichen Merkmale a. bis d. aus:
a. Die Zelle umfasst einen Elektrolyten, der mindestens ein Lösungsmittel aus der Gruppe mit Acetonitril (AN), Propylencarbonat (PC), Tetrahydrofuran (THF), Dimethylcarbonat (DMC), Diethylcarbonat (DEC), Ethylmethylcarbonat (EMC), Ethylencarbonat (EC), Vinylcarbonat (VC) und Fluoroethylencarbonat (FEC) umfasst.
b. In dem Elektrolyten gelöst ist mindestens eine Verbindung aus der Gruppe mit Fluoromethan (FM), Difluoromethan (DFM), Fluoroethan (FE), 1,1-Difluoroethan (1,1-DFE), 1,1,1,2-Tetrafluoroethan (1,1,1,2-TFE), und 2-Fluoropropan (2-FP).
c. Die Zelle umfasst einen Elektrolyten, der Lithium-bis-(trifluoromethan)sulfonylimid (LiTFSI) als Leitsalz umfasst.
d. Das Leitsalz ist in einer Konzentration von 0,5 bis 2,0 M, insbesondere von 1,2 M, in dem Elektrolyten enthalten.

Besonders bevorzugt sind die vier unmittelbar vorstehenden Merkmale a. bis d. in Kombination miteinander realisiert.

In einer sechsten, besonders bevorzugten Variante zeichnet sich die erfindungsgemäße Zelle hinsichtlich des Elektrolyten durch mindestens eines derdrei unmittelbar folgenden zusätzlichen Merkmale a. bis c. aus:
a. Die Zelle umfasst einen Elektrolyten, der mindestens ein Lösungsmittel aus der Gruppe mit Propylencarbonat (PC), Dimethoxyethan (DME), Acetonitril (AN), Dimethylsulfoxid (DMSO), Tetrahydrofuran (THF), Sulfolan (SL) und Ethylacetat (EA) umfasst.
b. Der Elektrolyten umfasst ein Leitsalz in einem Anteil von 2,5 bis 6,0 Mol.
c. Das Leitsalz ist LiTFSI.

Besonders bevorzugt sind die drei unmittelbar vorstehenden Merkmale a. bis c. in Kombination miteinander realisiert.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellungdes Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels austretenden Längsränder des Anodenstromkollektors und/oder des Kathodenstromkollektors nicht mehr als 5000 µm, bevorzugt nicht mehr als 3500 µm, aus den Stirnseiten herausragen.

Besonders bevorzugt ragt der Längsrand des Anodenstromkollektors aus der Stirnseite des Wickels nicht mehr als 2500 µm, besonders bevorzugt nicht mehr als 1500 µm, heraus. Besonders bevorzugt ragt der Längsrand des Kathodenstromkollektors aus der Stirnseite des Wickels nicht mehr als 3500 µm, besonders bevorzugt nicht mehr als 2500 µm, heraus.

Bevorzugt sind die Anode und die Kathode sind innerhalb des Elektroden-Separator-Verbunds versetzt zueinander angeordnet, um zu gewährleisten, dass der erste Längsrand des Anodenstromkollektors aus einer der endständigen Stirnseiten und der erste Längsrand des Kathodenstromkollektors aus der anderen der endständigen Stirnseiten austritt.

### Stromkollektoren

Die Stromkollektoren der erfindungsgemäßen Zelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Besonders geeignet als Metall für den Anodenstromkollektor sind beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich insbesondere Aluminium oder auch andere elektrisch leitfähige Materialien, darunter auch Aluminiumlegierungen. Auch hier kommt weiterhin auch Edelstahl in Frage, beispielsweise vom Typ 1.4404.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

### Materialarme Ausführungsform der Stromkollektoren

In besonders bevorzugten Ausgestaltungen ist die erfindungsgemäße Zelle durch mindestens eines der unmittelbar folgenden Merkmale a. bis c. gekennzeichnet:
a. Der streifenförmige Hauptbereich des mit dem Kontaktelement durch Verschweißung verbundenen Stromkollektors weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit dem Kontaktelement durch Verschweißung verbundene Stromkollektor ist in dem Hauptbereich perforiert, insbesondere durch Rundloch-oder Schlitzlochperforation.

Bevorzugt sind die unmittelbar vorstehenden Merkmale a. und b. oder a. und c., besonders bevorzugt die drei unmittelbar vorstehenden Merkmale a. bis c., in Kombination miteinander realisiert.

Die Vielzahl von Durchbrechungen resultiert in einem verringerten Volumen und auch in einem verringerten Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den streifenförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann sein, bei der Einbringung der Durchbrechungen darauf zu achten, dass der maximale Durchmesser der Durchbrechungen nicht zu groß ist. Bevorzugt sollten die Dimensionen der Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktelement durch Verschweißung verbundene Stromkollektor weist zumindest in einem Teilabschnitt des Hauptbereichs ein geringeres Flächengewicht auf als der freie Randstreifen desselben Stromkollektors.
b. Der mit dem Kontaktelement durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Die freien Randstreifen von Anoden- und Kathodenstromkollektor begrenzen den Hauptbereich zu den ersten Längsrändern hin. Bevorzugt umfassen sowohl der Anoden- als auch der Kathodenstromkollektor freie Randstreifen jeweils entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm² bis 250 N/mm² auf.

Es ist besonders bevorzugt, dass die unmittelbar vorstehenden Merkmale a. bis c. in Kombination miteinander verwirklicht sind.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oderähnlich ausgebildet sind. Diejeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der streifenförmige Hauptbereich des Anodenstromkollektors und der Hauptbereich des Kathodenstromkollektors sind beide durch eine Vielzahl der Durchbrechungen gekennzeichnet.
b. Die Zelle umfasst das Kontaktelement, das mit dem einem der ersten Längsränder durch Verschweißung verbunden ist, als erstes Kontaktelement, sowie weiterhin ein zweites metallisches Kontaktelement, das mit dem anderen der ersten Längsränder durch Verschweißung verbunden ist.

Es ist besonders bevorzugt, dass die unmittelbar vorstehenden Merkmale a. und b. in Kombination miteinander verwirklicht sind.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

Die Verwendung perforierter oder auf sonstige Weise mit einer Vielzahl von Durchbrechungen versehener Stromkollektoren ist bei Lithium-ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren vielfach über separate Ableiterfahnen. Eine Bildung zuverlässiger Schweißverbindung zwischen dieser Ableiterfahnen und perforierten Stromkollektoren ist in industriellen Massenproduktionsprozessen ohne eine inakzeptable Fehlerrate jedoch nur schwer realisierbar.

Erfindungsgemäß wird dieses Problem durch die beschriebene Verschweißung der Stromkollektorränder mit der oder den Kontaktelementen gelöst. Das erfindungsgemäße Konzept ermöglicht den vollständigen Verzicht auf separate Ableiterfahnen und ermöglicht so die Verwendung materialarmer, mit Durchbrechungen versehener Stromkollektoren. Insbesondere in Ausführungsformen, bei denen die freien Randstreifen der Stromkollektoren nicht mit Durchbrechungen versehen sind, kann eine Verschweißung zuverlässig mit ausgesprochen geringen Ausschussraten erfolgen.

Zu betonen ist, dass alle beschriebenen Ausführungsformen, bei denen der bevorzugt streifenförmige Hauptbereich des mit dem Kontaktelement durch Verschweißung verbundenen Stromkollektors eine Vielzahl von Durchbrechungen aufweist, völlig unabhängig von Merkmal k. aus Anspruch 1 realisierbar sind. Die Erfindung umfasst somit auch Zellen mit den Merkmalen a. bis j. des Anspruchs 1, bei denen der streifenförmige Hauptbereich des mit dem Kontaktelement durch Verschweißung verbundenen Stromkollektors eine Vielzahl von Durchbrechungen aufweist, die Anode aber nicht zwingend das metallische Lithium aufweist. Stattdessen kann die Anode als Aktivmaterial Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, umfassen, gegebenenfalls in Kombination mit einem Material aus der Gruppe mit Silizium, Aluminium, Zinn und Antimon oder einer Verbindung oder Legierung dieser Materialien, beispielsweise Siliziumoxid. Alternativ oder zusätzlich kann auch Lithiumtitanat (Li₄Ti₅O₁₂) oder ein Derivat desselben in der negativen Elektrode enthalten sein, bevorzugt ebenfalls in Partikelform.

### Gehäuse

In einer besonders bevorzugten Ausführungsform zeichnet sich das Gehäuse der erfindungsgemäßen Zelle durch mindestens eines der unmittelbar folgenden Merkmale a. und b. aus:
a. Das Gehäuse, das den Elektroden-Separator-Verbund umschließt, umfasst ein metallisches, rohrförmig ausgebildetes Gehäuseteil mit einer endständigen kreisförmigen Öffnung.
b. In dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt.

Es ist besonders bevorzugt, dass die unmittelbar vorstehenden Merkmale a. und b. in Kombination miteinander verwirklicht sind.

### Gehäuseverschluss

Besonders bevorzugt zeichnet sich die Zelle durch die zwei unmittelbar folgenden Merkmale a. und b. aus:
a. Das Kontaktelement umfasst einen kreisförmigen Rand.
b. Das Kontaktelement verschließt die endständige kreisförmige Öffnung des rohrförmig ausgebildeten Gehäuseteils.

Erfindungsgemäß wird also vorgeschlagen, als Kontaktelement eines mit einem kreisförmigen Rand einzusetzen und mit dem Kontaktelement die endständige kreisförmige Öffnung des rohrförmig ausgebildeten Gehäuseteils zu verschließen. Das Kontaktelement dient also nicht nur zum elektrischen Kontaktieren einer Elektrode, vielmehr fungiert es gleichzeitig als Gehäuseteil. Damit geht ein großer Vorteil einher, eine separate elektrische Verbindung zwischen dem Kontaktelement und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervorragende Entwärmungseigenschaften.

In einer bevorzugten Weiterbildung zeichnet sich die erfindungsgemäße Zelle durch mindestens eines der vier unmittelbar folgenden Merkmale a. bis d. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Der eine der ersten Längsränder ist mit dem Kontaktelement, insbesondere mit der Metallscheibe, durch Verschweißung verbunden.

Besonders bevorzugt sind alle vier unmittelbar vorstehenden Merkmale a. bis d. in Kombination miteinander realisiert.

Damit der Rand der Metallscheibe an der Innenseite des rohrförmig ausgebildeten Gehäuseteils entlang der umlaufenden Kontaktzone anliegen kann, ist es bevorzugt, dass das rohrförmige Gehäuseteil zumindest in dem Abschnitt, in dem der Rand der Metallscheibe anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe, angepasst.

Die Verschweißung des Randes der Metallscheibe mit dem rohrförmig ausgebildeten Gehäuseteil kann insbesondere mittels eines Lasers durchgeführtwerden. Alternativ wäre es aber auch möglich, die Metallscheibe durch Verlötung oder Verklebung zu fixieren.

Ein separates Dichtelement wird bei einer umlaufenden Schweißnaht nicht benötigt. Die Metallscheibe und das rohrförmige Gehäuseteil sind über die Schweißnaht dichtend miteinander verbunden. Darüber hinaus gewährleistet die Schweißverbindung auch eine nahezu widerstandfreie elektrische Verbindung zwischen der Metallscheibe und dem rohrförmigen Gehäuseteil.

In einer weiteren bevorzugten Weiterbildung zeichnet sich die erfindungsgemäße Zelle durch mindestens eines der vier unmittelbar folgenden Merkmale a. bis d. aus:
a. Das Kontaktelement ist oder umfasst eine Metallscheibe, deren Rand dem kreisförmigen Rand des Kontaktelements entspricht oder diesen mitbildet.
b. Die Zelle umfasst eine ringförmige Dichtung aus einem elektrisch isolierenden Material, die den kreisförmigen Rand des Kontaktelements umschließt.
c. Die Metallscheibe ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
d. Der eine der ersten Längsränder ist mit dem Kontaktelement, insbesondere mit der Metallscheibe, durch Verschweißung verbunden.

Besonders bevorzugt sind alle vier unmittelbar vorstehenden Merkmale a. bis d. in Kombination miteinander realisiert.

In dieser Ausführungsform wird also vorgeschlagen, als Kontaktelement eines mit einem kreisförmigen Rand einzusetzen, auf den kreisförmigen Rand des Kontaktelements eine ringförmige Dichtung aus einem elektrisch isolierenden Material aufzuziehen und mit dem Kontaktelement die endständige kreisförmige Öffnung des rohrförmig ausgebildeten Gehäuseteils zu verschließen.

Der Verschluss der Zelle kann beispielsweise durch einen Bördel- oder einen Crimpvorgang erfolgen, wobei die Dichtung komprimiert wird.

Damit die ringförmige Dichtung an der Innenseite entlang der umlaufenden Kontaktzone anliegen kann, ist es auch hier bevorzugt, dass das rohrförmige Gehäuseteil zumindest in dem Abschnitt, in dem die Dichtung anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe mit der darauf aufgezogenen Dichtung, angepasst.

Bei der Dichtung selbst kann es sich um eine übliche Kunststoffdichtung handeln, die chemisch beständig gegenüber den jeweils verwendeten Elektrolyten sein sollte. Dem Fachmann sind geeignete Dichtungsmaterialien bekannt.

Die Verschlussvariante mit der ringförmigen Dichtung aus dem elektrisch isolierenden Material führt dazu, dass das Kontaktelement gegenüber dem rohrförmig ausgebildeten Gehäuseteil elektrisch isoliert ist. Es bildet einen elektrischen Pol der Zelle. Bei derVerschlussvariante, bei der der Rand der Metallscheibe mit dem rohrförmig ausgebildeten Gehäuseteil über eine umlaufende Schweißnaht verbunden ist, besitzen das rohrförmig ausgebildete Gehäuseteil und das Kontaktelement die gleiche Polarität.

### Kontaktelement

Das Kontaktelement kann aus mehreren Einzelteilen, darunterdie Metallscheibe, bestehen, die aber nicht zwingend alle aus Metall bestehen müssen.

In der einfachsten Ausführungsformen handelt es sich bei der Metallscheibe um ein flaches Blechteil mit kreisförmigem Umfang, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und/oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege bzw. lineare Vertiefungen und/oder Erhöhungen aufweist. Weiterhin kann die Scheibe einen Rand aufweisen, der radial nach innen umgebogen ist, so dass sie einen doppellagigen Randbereich mit beispielsweise U-förmigem Querschnitt aufweist.

In einer Weiterbildung der ersten bevorzugten Erfindungsvariante zeichnet sich die erfindungsgemäße Zelle durch mindestens eines der drei unmittelbar folgenden Merkmale a. bis c. aus:
a. Die Metallscheibe weist auf einer ihrer Seiten mindestens eine rinnenförmige und/oder punktförmige Vertiefung auf, die auf ihrer anderen Seite als mindestens eine linienförmige und/oder punktförmige Erhöhung hervortritt.
b. Die Seite mit der mindestens einen Erhöhung steht in unmittelbarem Kontakt mit dem einen der ersten Längsränder.
c. Die mindestens eine Erhöhung und der eine der ersten Längsränder sind über mindestens einen Schweißpunkt und/oder mindestens eine Schweißnaht verbunden.

Besonders bevorzugt sind die unmittelbar vorstehenden Merkmale a. bis c. in Kombination realisiert.

Bevorzugt ist der Längsrand also unmittelbar an die Erhöhung geschweißt. Weiterhin ist es bevorzugt, dass mehrere Sicken als längliche Vertiefungen eingebracht werden.

In einer bevorzugten Weiterbildung der Metallscheibe der erfindungsgemäßen Zelle ist diese entsprechend durch mindestens eines der beiden folgenden Merkmale a. und b. gekennzeichnet:
a. Die Metallscheibe weist auf einer ihrer Seiten mehrere rinnenförmige Vertiefungen in vorzugsweise sternförmige Anordnung auf, die auf ihrer anderen Seite als linienförmige Erhöhungen hervortreten.
b. Die Metallscheibe umfasst in jeder der rinnenförmigen Vertiefungen mindestens eine Schweißnaht, vorzugsweise zwei parallele Schweißnähte, in Folge einer Verschweißung der Metallscheibe mit dem einen der ersten Längsränder.

Besonders bevorzugt sind die unmittelbar vorstehenden Merkmale a. und b. in Kombination realisiert.

Durch die sternförmige Anordnung sowie gegebenenfalls die Doppelschweißnaht ist eine gute und vor allem gleichmäßige Anbindung der Metallscheibe an den einen der ersten Längsränder gewährleistet.

In einer besonders bevorzugten Weiterbildung zeichnet sich die erfindungsgemäße Zelle durch mindestens eines der unmittelbar folgenden Merkmale a. und b. aus:
a. das Kontaktelement umfasst zusätzlich zu der Metallscheibe ein Kontaktblech.
b. Das Kontaktblech steht in unmittelbarem Kontakt mit dem einen der ersten Längsränder und ist mit diesem Längsrand durch Verschweißung verbunden.

Besonders bevorzugt sind die unmittelbar vorstehenden Merkmale a. und b. in Kombination realisiert.

Das Kontaktelement umfasst in dieser Ausführungsform also mindestens zwei Einzelteile. Die Metallscheibe dient hier zum Verschließen des Gehäuses, während das Kontaktblech den Längsrand des Stromkollektors kontaktiert.

Das Kontaktblech kann in einigen bevorzugten Ausführungsforen einen kreisförmigen Umfang aufweisen, zwingend erforderlich ist dies aber keineswegs. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens eine Perforierung aufweist. Diese können dazu dienen, einer Verformung des Kontaktblechs bei der Herstellung einer Schweißverbindung zu dem ersten Längsrand entgegenzuwirken.

Weiterhin kann das Kontaktblech Aussparungen wie Löcher oder Spalte aufweisen, die dem Zweck dienen, die Verteilung des Elektrolyten beim Dosieren zu vereinfachen und das Entweichen bei der Formation oder in Folge eines Fehlgebrauchs oder Defekts gebildeter Gase aus dem Wickelinneren zu begünstigen.

Bevorzugt liegen das Kontaktblech und die Metallscheibe zumindest bereichsweise flach aufeinander, so dass eine zweidimensionale Kontaktfläche vorliegt.

Bevorzugt stehen das Kontaktblech und die Metallscheibe in unmittelbarem Kontakt miteinander. In diesem Fall sind sie besonders bevorzugt durch Verschweißung oder Verlötung aneinander fixiert.

In besonders bevorzugten Ausführungsformen ist das Kontaktblech ausgebildet wie die in der WO 2017/215900 A1 beschriebenen Kontaktplatten.

In einer besonders bevorzugten Ausführungsform kann das Kontaktelement zusätzlich zu der Metallscheibe und gegebenenfalls auch zusätzlich zu dem Kontaktblech einen profilierten metallischen Poldeckel mit kreisförmigem Umfang umfassen, der auf die Metallscheibe aufgeschweißt sein kann und näherungsweise oder exakt den gleichen Durchmesser wie die Metallscheibe aufweist, so dass der Rand der Metallscheibe und der Rand des Poldeckels gemeinsam den Rand des Kontaktelements bilden. In einer weiteren Ausführungsform kann der Rand des Poldeckels durch einen radial nach innen umgebogenen Rand der Metallscheibe umschlossen werden. In bevorzugten Ausführungsformen kann sogar eine Klemmverbindung zwischen den beiden Einzelteilen bestehen.

### Verschweißung des Kontaktelements mit dem einen der ersten Längsränder

Das KonzeptderVerschweißungder Rändervon Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

### Gehäusevariante mit Gehäusebecher

In einer besonders bevorzugten Ausführungsform der Erfindung zeichnet sich die erfindungsgemäße Zelle durch mindestens eines der unmittelbar folgenden zusätzlichen Merkmale a. und b. aus:
a. Das rohrförmig ausgebildete Gehäuseteil ist Bestandteil eines Gehäusebechers, der einen kreisförmigen Boden umfasst.
b. Der andere der ersten Längsränder liegt unmittelbar an dem Boden an und ist mit dem Boden bevorzugt durch Verschweißung verbunden.

Besonders bevorzugt sind die unmittelbar vorstehenden Merkmale a. und b. in Kombination realisiert.

Diese Variante eignet sich vor allem für Zellen gemäß der oben beschriebenen Verschlussvariante mit der ringförmigen Dichtung aus dem elektrisch isolierenden Material. Kommt die Verschlussvariante, bei der der Rand der Metallscheibe mit dem rohrförmig ausgebildeten Gehäuseteil über eine umlaufende Schweißnaht verbunden ist, zum Einsatz, wird in der Regel eine Poldurchführung benötigt.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird.

Gemäß der vorliegenden Erfindung ist es also möglich und bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktelement, anzukoppeln. Die Nutzung des verfügbaren Innenvolumens des Zellgehäuses für aktive Komponenten nähert sich so ihrem theoretischen Optimum.

Die Ankopplung des anderen der ersten Längsränder an den Boden oder an das Kontaktblech folgt grundsätzlich den gleichen konstruktiven Prinzipien wie im Fall der Ankopplung des einen der ersten Längsränder an das Kontaktelement. Der Längsrand liegt am Boden an so dass sich eine linienartige Kontaktzone ergibt, die im Falle der spiralförmig aufgewickelten Elektroden einen spiralförmigen Verlauf aufweist. Entlang dieser linien- und bevorzugt spiralförmigen Kontaktzone oder quer dazu kann mittels geeigneter Schweißverbindungen eine möglichst gleichmäßige Anbindung des Längsrands an den Boden realisiert werden.

### Gehäusevariante mit zwei Deckeln

In einer weiteren besonders bevorzugten Ausführungsform der Erfindung zeichnet sich die erfindungsgemäße Zelle durch mindestens eines der drei unmittelbar folgenden zusätzlichen Merkmale a. bis c. aus:
a. Das rohrförmig ausgebildete Gehäuseteil weist eine weitere endständige kreisförmige Öffnung auf.
b. Die Zelle umfasst ein Verschlusselement mit einem kreisförmigen Rand, das diese weitere endständige Öffnung verschließt.
c. Das Verschlusselement für die weitere endständige Öffnung ist oder umfasst eine Metallscheibe, deren Rand dem kreisförmigen Rand des metallischen Verschlusselements entspricht oder diesen mitbildet.

Besonders bevorzugt sind die unmittelbar vorstehenden Merkmale a. bis c. in Kombination realisiert.

In dieser Ausführungsform ersetzt das rohrförmig ausgebildete Gehäuseteil gemeinsam mit einem Verschlusselement einen Gehäusebecher. Das Gehäuse setzt sich also aus drei Gehäuseteilen zusammen, von denen eines rohrförmig ausgebildet ist und die anderen beiden (das Kontaktelement und das Verschlusselement) die endständigen Öffnungen des rohrförmigen Teils als Deckel verschließen. Produktionstechnisch bietet dies Vorteile, da für die Herstellung rohrförmiger Gehäuseteile, anders als bei Gehäusebechern, keine Tiefziehwerkzeuge benötigt werden. Daneben resultieren bei einer unmittelbaren Anbindung des anderen der ersten Längsränder an das Verschlusselement grundsätzlich die gleichen Vorteile wie bei der oben beschriebenen Anbindung an den Boden eines Gehäusebechers.

Das rohrförmig ausgebildete Gehäuseteil ist in dieser Ausführungsform bevorzugt zylindrisch bzw. hohlzylindrisch ausgebildet. Bei dem Verschlusselement handelt es sich in der einfachsten Ausführungsform um eine Metallscheibe mit kreisförmigem Umfang. Weiter bevorzugt kann die Metallscheibe des Verschlusselements ausgebildet sein wie die Metallscheibe des Kontaktelements.

In einigen bevorzugten Ausführungsformen kann das Verschlusselement, insbesondere die Metallscheibe, einen Rand aufweisen, der radial nach innen umgebogen ist, so dass es oder sie einen doppellagigen Randbereich mit beispielsweise U-förmigem Querschnitt aufweist.

In einer weiteren Ausführungsform kann das Verschlusselement, insbesondere die Metallscheibe, auch einen Rand aufweisen, der um 90° umgebogen ist, so dass er einen L-förmigen Querschnitt aufweist.

In einer Weiterbildung dieser besonders bevorzugten Ausführungsformen zeichnet sich die erfindungsgemäße Zelle durch mindestens eines der unmittelbar folgenden Merkmale a. bis c. aus:
a. Die Metallscheibe des Verschlusselements oder die das Verschlusselement bildende Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
b. Der Rand der Metallscheibe ist mit dem rohrförmig ausgebildeten Gehäuseteil über eine umlaufende Schweißnaht verbunden.
c. Das rohrförmig ausgebildete Gehäuseteil umfasst einen kreisförmigen Rand, der radial nach innen über den Rand des Verschlusselements, insbesondere den Rand der Metallscheibe, umgebogen ist.

Besonders bevorzugt sind die unmittelbar vorstehenden Merkmale a. und b., gegebenenfalls auch die unmittelbar vorstehenden Merkmale a. bis c., in Kombination realisiert.

Gemäß dieser Weiterbildung ist es also bevorzugt, das Verschlusselement durch Verschweißung in derweiteren endständigen Öffnungzu fixieren. Ein separates Dichtelement wird bei einer umlaufenden Schweißnaht auch hier nicht benötigt.

Diese Weiterbildung ist dann besonders bevorzugt, wenn die Zelle gemäß der oben beschriebenen ersten Verschlussvariante verschlossen wurde.

Das radiale Umbiegen des Randes des Verschlusselements ist eine fakultative Maßnahme, die zum Fixieren des Verschlusselements nicht benötigt wird, ungeachtet dessen aber zweckmäßig sein kann.

In einer Weiterbildung zeichnet sich die erfindungsgemäße Zelle durch eines der unmittelbarfolgenden Merkmale a. oder b. aus:
a. Derandere derersten Längsränder liegt unmittelbar an der Metallscheibe des Verschlusselements oder an der das Verschlusselement bildenden Metallscheibe an und ist mit der Metallscheibe bevorzugt durch Verschweißung verbunden.
b. Der andere der ersten Längsränder ist an ein Kontaktblech geschweißt, das unmittelbar an der Metallscheibe anliegt.

Grundsätzlich ist es auch hier möglich, dass - wie im Falle des Kontaktelements, zwischen dem Längsrand des anderen der ersten Längsränder und der Metallscheibe bzw. dem Verschlusselement lediglich eine mittelbare Verbindung über ein Kontaktblech besteht. In diesem Fall besteht zwischen dem Kontaktblech und dem Verschlusselement, insbesondere der Metallscheibe des Verschlusselements, bevorzugt eine Verbindung durch unmittelbare Verschweißung. Das Kontaktblech kann dabei wie sein Pendant im Falle des oben beschriebenen Kontaktelements ausgestaltet sein.

Die Ankopplung des anderen der ersten Längsränderan die Metallscheibe oder an das Kontaktblech des Verschlusselements folgt auch hier den grundsätzlich gleichen konstruktiven Prinzipien wie im Fall der Ankopplung des einen der ersten Längsränder an das Kontaktelement. Der Längsrand liegt an der Metallscheibe oder an dem Kontaktblech an, so dass sich eine linienartige Kontaktzone ergibt, die im Falle der spiralförmig aufgewickelten Elektroden einen spiralförmigen Verlauf aufweist. Entlang dieser linien- und bevorzugt spiralförmigen Kontaktzone oderquerdazu kann mittels geeigneter Schweißverbindungen eine möglichst gleichmäßige Anbindung des Längsrands an die Metallscheibe oder an das Kontaktblech realisiert werden.

### Gehäusematerialien

Die Wahl des Materials, aus dem der Gehäusebecher, die Metallscheibe und/oder das Kontaktblech und das Verschlusselement bzw. dessen oder deren Komponenten gefertigt werden, hängt davon ab, ob der Anoden- oder der Kathodenstromkollektor an das jeweilige Gehäuseteil angebunden ist. Bevorzugt sind grundsätzlich die gleichen Materialien, aus denen die Stromkollektoren selbst gefertigt werden. Die genannten Gehäuseteile können beispielsweise aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin können das Gehäuse und dessen Komponenten aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen beispielsweise die Innenseite des Gehäusebechers bzw. des Bodens des Gehäusebechers.

Weitere geeignete Materialien sind dem Fachmann bekannt.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch die oben genannten Verschweißungen mit dem Kontakt- oder dem Verschlusselement, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Zelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titandioxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die streifenförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die streifenförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt streifenförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der erfindungsgemäßen Zelle

Bei der erfindungsgemäßen Zelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zurVersorgung von kleinen elektronischen Geräten wie Uhren, Hörgeräten und kabellosen Kopfhörern mit elektrischer Energie.

Die Nennkapazität einer als Lithium-Ionen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Zelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2,Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
   auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

In einer besonders bevorzugten Ausführungsform der Erfindung zeichnet sich die erfindungsgemäße Zelle durch das folgende zusätzliche Merkmal aus:
a. Das Kontaktelement umfasst ein Sicherheitsventil, über das bei Überschreiten eines weiteren Druckschwellwerts Druck aus dem Gehäuse entweichen kann.

Bei diesem Sicherheitsventil kann es sich beispielsweise um eine Berstmembran, ein Berstkreuz oder eine ähnliche Sollrissstelle handeln, die bei einem definierten Überdruck in der Zelle aufreißen kann, um eine Explosion der Zelle zu verhindern. Besonders bevorzugt kann die Metallscheibe des Kontaktelements das Sicherheitsventil, insbesondere in Form einer Sollrissstelle, aufweisen.

### Prismatische Ausführungsform

Die Verwendung einer metallisches Lithium umfassenden Anode ist nicht auf zylindrische Zellen beschränkt. Vielmehr können auch Energiespeicherelemente, die einen von einem prismatischen Gehäuse umschlossenen Stapel umfassen, der aus zwei oder mehr identischen Elektroden-Separator-Verbünden gebildet ist, solche Anoden umfassen.

Die Erfindung umfasst daher auch ein Energiespeicherelement mitden unmittelbarfolgenden Merkmalen a. bis j.:
a. Das Energiespeicherelement umfasst mindestens zwei Elektroden-Separator-Verbünde mit der Sequenz Anode / Separator / Kathode.
b. Die Anoden der Verbünde sind bevorzugt rechteckig ausgebildet und umfassen jeweils einen Anodenstromkollektor mit einem Anodenstromkollektorrand.
c. Die Anodenstromkollektoren weisen jeweils einen Hauptbereich, der mit einer Schicht aus negativem Elektrodenmaterial beladen ist, sowie einen freien Randstreifen, der sich entlang des jeweiligen Anodenstromkollektorrands erstreckt und der nicht mit dem Elektrodenmaterial beladen ist, auf.
d. Die Kathoden der Verbünde sind bevorzugt rechteckig ausgebildet und umfassen jeweils einen Kathodenstromkollektor mit einem Kathodenstromkollektorrand.
e. Die Kathodenstromkollektoren weisen jeweils einen Hauptbereich, der mit einer Schicht aus positivem Elektrodenmaterial beladen ist, sowie einen freien Randstreifen, der sich entlang des jeweiligen Kathodenstromkollektorrands erstreckt und der nicht mit dem Elektrodenmaterial beladen ist, auf.
f. Die mindestens zwei Elektroden-Separator-Verbünde liegen aufeinander gestapelt vor, wobei der Stapel aus den Verbünden zwei endständigen Seiten aufweist.
g. Der Stapel aus den Elektroden-Separator-Verbünden ist von einem prismatischen Gehäuse umschlossen.
h. Die Anoden und die Kathoden sind derart ausgebildet und/oder zueinander angeordnet, dass die Anodenstromkollektorränderaus einer der endständigen Seiten und die Kathodenstromkollektorränder aus der anderen der endständigen Seiten austreten.
i. Das Energiespeicherelement weist ein metallisches Kontaktelement auf, das mit diesen Anodenstromkollektorrändern oder diesen Kathodenstromkollektorrändern in unmittelbarem Kontakt steht.
j. Das Kontaktelement ist mit den Rändern, mit denen es in unmittelbarem Kontakt steht, durch Verschweißung verbunden.
k. Die Schicht aus dem negativen Elektrodenmaterial umfasst metallisches Lithium.

Für die Schicht aus dem negativen Elektrodenmaterial, die Schicht aus dem positiven Elektrodenmaterial, den Separator und den Elektrolyten gelten die gleichen bevorzugten Weiterbildungen wie im Fall der erfindungsgemäßen Lithium-Ionen-Zelle.

### KURZBESCHREIBUNG DER ZEICHNUNGEN

In den Zeichnungen zeigen schematisch
- Fig. 1 eine Draufsicht eines Stromkollektors in einer erfindungsgemäßen Ausgestaltung,
- Fig. 2 eine geschnittene Ansicht des in Fig. 1 dargestellten Stromkollektors,
- Fig. 3 eine Draufsicht einerAnode, diezu einem Elektroden-Separator-Verbund in Form eines Wickels verarbeitet werden kann,
- Fig. 4 eine geschnittene Ansicht der in Fig. 3 dargestellten Anode,
- Fig. 5 eine Draufsicht auf einen unter Verwendung der in Fig. 3 dargestellten Anode gefertigten Elektroden-Separator-Verbund,
- Fig. 6 eine geschnittene Ansicht des in Fig. 5 dargestellten Elektroden-Separator-Verbunds,
- Fig. 7 verschiedene Ausführungsformen eines Kontaktelements einer erfindungsgemäßen Zelle (Querschnittsdarstellungen),
- Fig. 8 eine Teildarstellung einer Ausführungsform einer erfindungsgemäßen Zelle (Querschnittsdarstellung),
- Fig. 9 eine Teildarstellung einer weiteren Ausführungsform einer erfindungsgemäßen Zelle (Querschnittsdarstellung),
- Fig. 10 eine Darstellung einer weiteren Ausführungsform einer erfindungsgemäßen Zelle (Querschnittsdarstellung), und
- Fig. 11 eine Darstellung einer weiteren Ausführungsform einer erfindungsgemäßen Zelle (Querschnittsdarstellung).

### DETAILLIERTE BESCHREIBUNG DER AUSFÜHRUNGSBEISPIELE

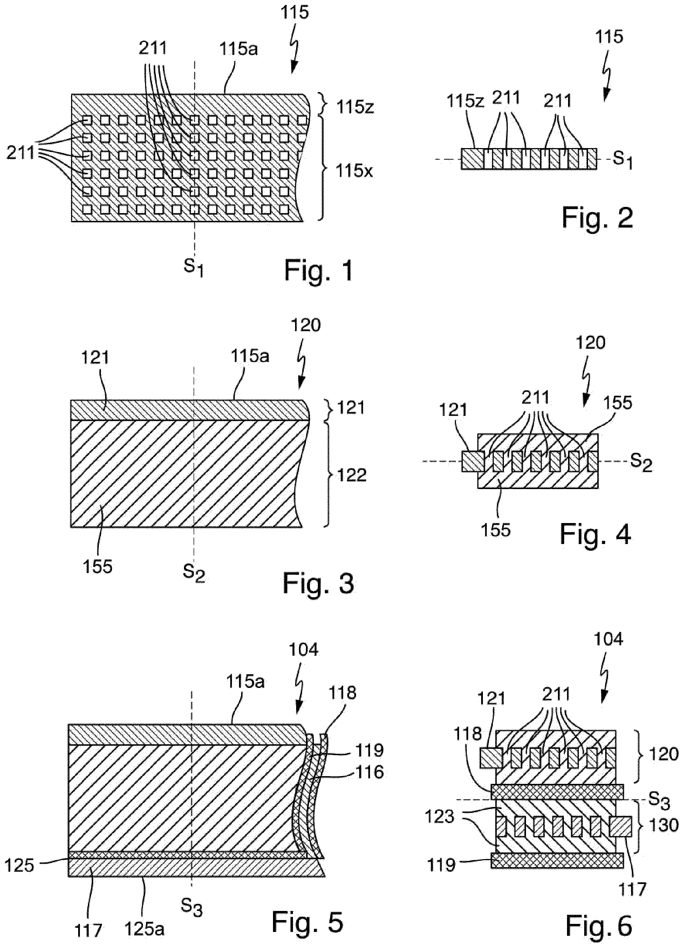

**Fig. 1** und **Fig. 2** veranschaulichen das Design eines Stromkollektors 115, der in einer erfindungsgemäßen Zelle verwendet werden kann. Bei Fig. 2 handelt es sich um einen Schnitt entlang S₁. Der Stromkollektor 115 umfasst eine Vielzahl Durchbrechungen 211, bei denen es sich um rechteckige Löcher handelt. Der Bereich 115x ist durch die Durchbrechungen 211 gekennzeichnet, wohingegen sich im Bereich 115z entlang des Längsrands 115a keine Durchbrechungen finden. Der Stromkollektor 115 weist daher im Bereich 115x ein deutlich geringeres Flächengewicht auf als im Bereich 115z.

**Fig. 3** und **Fig. 4** veranschaulichen eine Anode 120, die unter beidseitigem Auftrag eines negativen Elektrodenmaterials 155 auf den in Fig. 1 und Fig. 2 dargestellten Stromkollektor 115 gefertigt wurde. Bei Fig. 4 handelt es sich um einen Schnitt entlang S₂. Der Stromkollektor 115 weist nun einen streifenförmigen Hauptbereich 122 auf, der mit einer Schicht aus dem negativen Elektrodenmaterial 123 beladen ist, sowie einen freien Randstreifen 121, der sich entlang des Längsrands 115a erstreckt und der nicht mit dem Elektrodenmaterial 155 beladen ist. Das Elektrodenmaterial 155 befüllt darüber hinaus auch die Durchbrechungen 211.

**Fig. 5** und **Fig. 6** veranschaulichen einen Elektroden-Separator-Verbund 104, der unter Verwendung der in Fig. 3 und Fig. 4 dargestellten Anode 120 gefertigt wurde. Daneben umfasst er die Kathode 130 sowie die Separatoren 118 und 119. Bei Fig. 6 handelt es sich um einen Schnitt entlang S₃. Die Kathode 130 baut auf dem gleichen Stromkollektordesign auf wie die Anode 120. Bevorzugt unterscheiden sich die Stromkollektoren 115 und 125 von Anode 120 und Kathode 130 nur durch die jeweilige Materialauswahl. So umfasst der Stromkollektor 125 der Kathode 130 einen streifenförmigen Hauptbereich 116, der mit einer Schicht aus positivem Elektrodenmaterial 123 beladen ist, sowie einen freien Randstreifen 117, der sich entlang des Längsrands 125a erstreckt und der nicht mit dem Elektrodenmaterial 123 beladen ist. Durch spiralförmiges Aufwickeln kann der Elektroden-Separator-Verbund 104 in einen Wickel überführt werden, wie er in einer erfindungsgemäßen Zelle enthalten sein kann.

Die freien Randstreifen 117 und 121 sind in einigen bevorzugten Ausführungsformen beidseitig sowie zumindest bereichsweise mit einem elektrisch isolierenden Stützmaterial, beispielsweise mit einem keramischen Material wie Silizium- oder Aluminiumoxid, beschichtet.

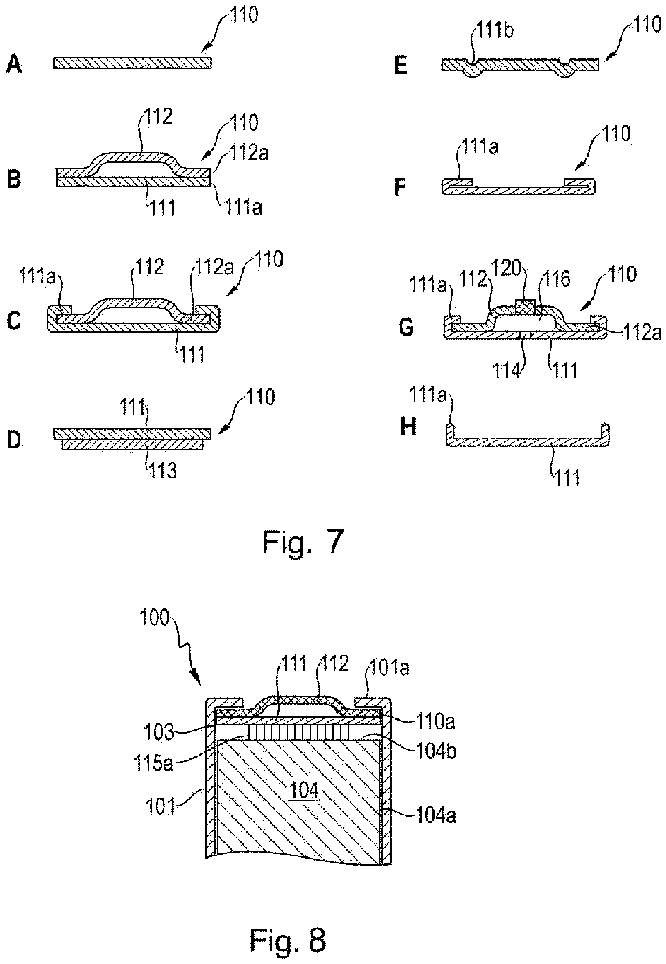

In **Fig. 7** finden sich Querschnittsdarstellungen verschiedener Ausführungsformen A bis H von Kontaktelementen 110, sie sich zum Verschließen erfindungsgemäßer Zellen 100 eignen. Im Einzelnen:
A Hier ist die einfachste Ausführungsform eines Kontaktelements 110 gemäß der Erfindung dargestellt, nämlich eine flache Metallscheibe mit kreisrundem kreisförmigem Umfang, welche sich nur in einer Ebene erstreckt. Die Metallscheibe kann beispielsweise aus Aluminium bestehen.
B Das hier dargestellte Kontaktelement 110 umfasst die Metallscheibe 111 und den metallischen Poldeckel 112. Die Metallscheibe 111 und der Poldeckel 112 weisen jeweils einen kreisförmigen Umfang und einen identischen Durchmesser auf. Während sich die Metallscheibe 111 nur in einer Ebene erstreckt, weist der Poldeckel 112 eine zentrale Wölbung auf. Die beiden Teile 111 und 112 des Kontaktelements 110 sind bevorzugt durch eine Verschweißung (nicht dargestellt) miteinander verbunden.
C Das hier dargestellte Kontaktelement 110 umfasst die Metallscheibe 111 und den metallischen Poldeckel 112. Der Poldeckel 112 ist analog zu dem Poldeckel in B ausgebildet. Allerdings ist der Rand 111a der Metallscheibe 111 hier radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Ungeachtet dessen ist es bevorzugt, wenn die Metallscheibe 111 und der Poldeckel 112 zusätzlich miteinander verschweißt sind.
D Das hier dargestellte Kontaktelement 110 umfasst die Metallscheibe 111 und das metallische Kontaktblech 113. Das Kontaktblech 113 liegt flach an der Metallscheibe 111 an und ist mit dieser vorzugsweise verschweißt. Die Metallscheibe 111 kann beispielsweise aus Edelstahl bestehen, das Kontaktblech 113 beispielsweise aus einer Aluminiumlegierung.
E Das hier dargestellte Kontaktelement 110 umfasst lediglich eine Metallscheibe. Diese weist im Unterschied zu der in A dargestellten Metallscheibe auf ihrer Oberseite eine kreisförmige Vertiefung 111b sowie auf ihrer Unterseite eine dazu korrespondierende Erhöhung auf, ist also profiliert.
F Das hier dargestellte Kontaktelement 110 umfasst lediglich eine Metallscheibe. Diese weist im Unterschied zu der in A dargestellten Metallscheibe einen radial nach innen umgeschlagenen Rand 111a und in der Folge einen doppellagigen Randbereich auf.
G Das hier dargestellte Kontaktelement 110 umfasst die Metallscheibe 111 und den metallischen Poldeckel 112, der eine zentrale Wölbung aufweist. Der Rand 111a der Metallscheibe 111 ist radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Bevorzugt sind die Ränder 111a und 112a der Metallscheibe 111 und des Poldeckels 112 zusätzlich durch eine umlaufende Verschweißung (nicht dargestellt) miteinander verbunden. Im Zentrum der Metallscheibe 111 findet sich das Loch 114, durch das ein Hohlraum 116 zugänglich ist, der von der Metallscheibe 111 und dem Poldeckel 112 eingeschlossen ist. In den Poldeckel 112 ist eine Überdrucksicherung 120 integriert, die bei einem Überdruck im Hohlraum 116 auslösen kann. Bei der Überdrucksicherung 120 kann es sich im einfachsten Fall um eine Sollrissstelle handeln.
H Das hier dargestellte Kontaktelement umfasst lediglich eine Metallscheibe 111. Diese weist einen um 90° umgebogenen Rand 111a mit L-förmigem Querschnitt auf.

Verschlusselemente gemäß dervorliegenden Erfindung, die im Rahmen der oben beschriebenen Gehäusevariante mit zwei Deckeln zum Einsatz kommen können, können bevorzugt ebenso gemäß den Ausführungsformen A bis H ausgestaltet sein.

Die in **Fig. 8** dargestellte Zelle 100 umfasst das in Fig. 7B dargestellte Kontaktelement 110, dessen Rand 110a von den Rändern 111a und 112a der Metallscheibe 111 und des metallischen Poldeckels 112 gebildet wird. Das Kontaktelement 110 bildet gemeinsam mit dem hohlzylindrisch ausgebildeten, metallischen Gehäuseteil 101 das Gehäuse der Zelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

In dem Gehäuse ist der spiralförmig gewickelte Elektroden-Separator-Verbund 104 axial ausgerichtet, so dass sein Wickelmantel 104a an der Innenseite des rohrförmig ausgebildeten Gehäuseteils 101 anliegt. Aus der obenliegenden Stirnseite 104b des als Wickel ausgebildeten Elektroden-Separator-Verbunds 104 tritt die Längsrand 115a des Anodenstromkollektors aus. Dieser ist unmittelbar an die Unterseite der Metallscheibe 111 geschweißt.

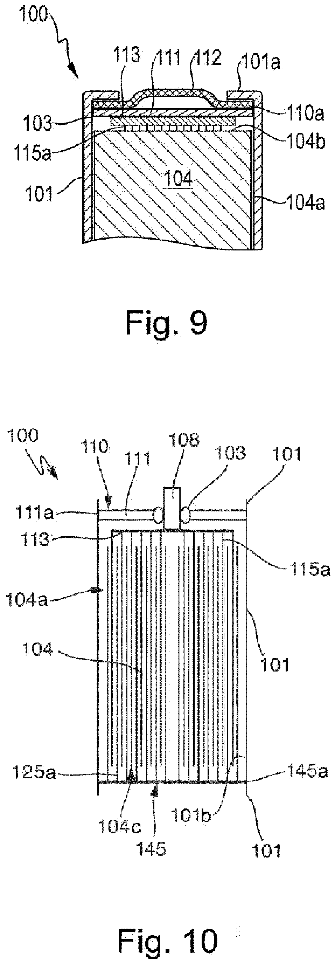

Die in **Fig. 9** dargestellte Zelle 100 umfasst das in Fig. 1B dargestellte Kontaktelement 110, dessen Rand 110a von den Rändern 111a und 112a der Metallscheibe 111 und des Poldeckels 112 gebildet wird. Das Kontaktelement 110 bildet gemeinsam mit dem hohlzylindrisch ausgebildeten, metallischen Gehäuseteil 101 das Gehäuse der Zelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

Das Kontaktelement 110 umfasst weiterhin ein metallisches Kontaktblech 113 mit zwei Seiten, von denen eine in Richtung der Metallscheibe 111 weist, sogar flach an ihr anliegt, und durch Verschweißung mit der Metallscheibe 111 verbunden ist.

In dem Gehäuse ist der spiralförmig gewickelte Elektroden-Separator-Verbund 104 axial ausgerichtet, so dass sein Wickelmantel 104a an der Innenseite des rohrförmig ausgebildeten, metallischen Gehäuseteils 101 anliegt. Aus der obenliegenden Stirnseite 104b des als Wickel ausgebildeten Elektroden-Separator-Verbunds 104 tritt die Längsrand 115a des Anodenstromkollektorsaus. Dieser liegt unmittelbar an der Unterseite des Kontaktblechs 113 an und ist mit der Unterseite des Kontaktblechs 113 verschweißt.

Die in **Fig. 10** dargestellte Zelle 100 ist ein Beispiel für die oben beschriebene dritte bevorzugte Erfindungsvariante. Sie umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der Längsrand 115a des Anodenstromkollektors aus. Aus der untenliegenden Stirnseite 104c des als Wickel ausgebildeten Elektroden-Separator-Verbunds 104 tritt der Längsrand 125a des Kathodenstromkollektors aus.

Die Zelle 100 umfasstdas rohrförmig und hohlzylindrisch ausgebildete, metallische Gehäuseteil 101, das zwei endständige Öffnungen aufweist. Die oben liegende Öffnung ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweißnaht verbunden.

Die Metallscheibe 111 ist Bestandteil eines Kontaktelements 110, das neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung verbunden. Der Polstift 108 ist an das Kontaktblech 113 geschweißt und durch eine zentrale Durchbrechung in der Metallscheibe 111 aus dem Gehäuse der Zelle 100 herausgeführt.

Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert.

Die untenliegende Öffnung des Gehäuseteils 101 ist mit dem Verschlusselement 145 verschlossen. Bei dem Verschlusselement 145 handelt es sich um eine Metallscheibe, deren Rand 145a entlang einer umlaufenden Kontaktzone an der Innenseite 101b des rohrförmig ausgebildeten Gehäuseteils 101 anliegt. Der Rand 145a des Verschlusselements 145 ist mit dem rohrförmig ausgebildeten Gehäuseteil 101 über eine umlaufende Schweißnaht verbunden.

An der innenliegenden (oberen) Seite des Kontaktblechs 113 liegt der Längsrand 125a des Kathodenstromkollektors unmittelbar an. Der Längsrand 125a ist mit dem Verschlusselement 145 durch Verschweißung verbunden. Die Verschweißung kann beispielsweise mittels eines Laser durch die Metallscheibe des Verschlusselements 145 hindurch bewirkt werden.

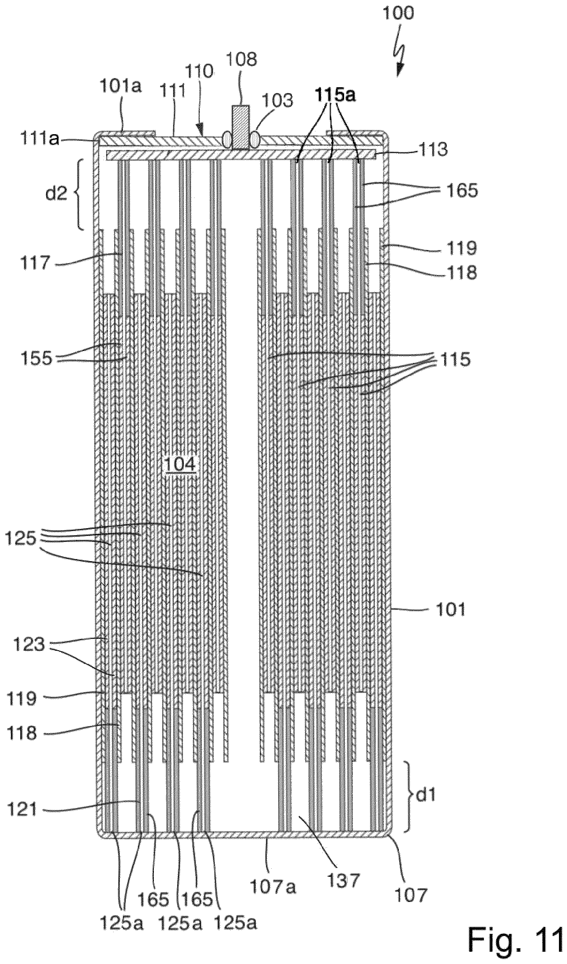

Die in **Fig. 11** dargestellte Zelle 100 umfasst ein hohlzylindrisch ausgebildetes Gehäuseteil 101, das Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit dem Kontaktelement 110, das die flache Metallscheibe 111 mit dem kreisförmigem Rand 111a umfasst, einen Innenraum 137 ein, in dem der als Wickel ausgebildete Elektroden-Separator-Verbund 104 axial ausgerichtet ist. Die Metallscheibe 111 ist derart in dem rohrförmig ausgebildeten Gehäuseteil 101 angeordnet, dass ihr Rand 111a entlang einer umlaufenden Kontaktzone an der Innenseite 101b des rohrförmig ausgebildeten Gehäuseteils 101 anliegt. Ihr Rand 111a entsprecht dem Rand des Kontaktelements und ist mit dem rohrförmig ausgebildeten Gehäuseteil 101 über eine umlaufende Schweißnaht verbunden. Der Rand 101a des rohrförmig ausgebildeten Gehäuseteils 101 ist radial (hier um ca. 90 °) nach innen über den Rand 110a des Kontaktelements 110 umgebogen.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds 104 werden durch die Längsränder der Separatoren 118 und 119 gebildet. Aus diesen Stirnseiten ragen die Stromkollektoren 115 und 125 hervor. Die entsprechenden Überstände sind mit d1 und d2 bezeichnet.

Aus der oberen Stirnseite des Elektroden-Separator-Verbunds 104 tritt der Anodenstromkollektor 115 aus, aus der unteren Stirnseite der Kathodenstromkollektor 125. Der Anodenstromkollektor 115 ist in einem streifenförmigen Hauptbereich mit einer Schicht aus einem negativen Elektrodenmaterial 155 beladen. Der Kathodenstromkollektor 125 ist in einem streifenförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Neben der Metallscheibe 111 umfasst das Kontaktelement 110 weiterhin das Kontaktblech 113 und den Polstift 108. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, steht der Längsrand 115a über seine gesamte Länge in unmittelbarem Kontakt mit dem Kontaktblech 113 und damit mit dem Kontaktelement 110 und ist mit diesem mindestens über mehrere Abschnitte, bevorzugt über seine gesamte Länge, durch Verschweißung verbunden. Alternativ kann hier die oben beschriebene Multi-Pin-Verbindungvorliegen. Das Kontaktelement 110 dient somit gleichzeitig zur elektrischen Kontaktierung der Anode und als Gehäuseteil.

Der Polstift 108 ist an das Kontaktblech 113 geschweißt und durch eine zentrale Durchbrechung in der Metallscheibe 111 aus dem Gehäuse der Zelle 100 herausgeführt. Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert. Lediglich die Metallscheibe 111 steht in unmittelbarem und damit auch in elektrischem Kontakt mit dem Gehäusebecher 107. Der Polstift 108 und das Kontaktblech 113 sind gegen den Gehäusebecher isoliert.

Der Rand 125a des Kathodenstromkollektors 125 steht über seine gesamte Länge in unmittelbarem Kontakt mit dem Boden 107a und ist mit diesem mindestens über mehrere Abschnitte, bevorzugt über seine gesamte Länge, durch Verschweißung (insbesondere mit Hilfe eines Lasers) verbunden. Alternativ kann auch hier die oben beschriebene Multi-Pin-Verbindung vorliegen. Der Boden 107a dient somit nicht nur als Teil des Gehäuses sondern auch zur elektrischen Kontaktierung der Kathode.

Der Elektroden-Separator-Verbund 104 kann beispielsweise eine positive Elektrode aus 95 Gew.-% NMCA, 2 Gew.-% eines Elektrodenbinders und 3 Gew.-% Ruß als Leitmittel umfassen. Die Anode 101 kann eine poröse, elektrisch leitfähige Matrix 101b mit offenporiger Struktur, in deren Poren metallisches Lithium eingelagert ist, umfassen. Als Elektrolyt kann eine 2 M Lösung von LiPF6 in THF/mTHF (1:1) oder eine 1.5 M Lösung von LiPF₆ in FEC/EMC (3:7) mit 2 Gew.-% VC eingesetzt werden.

## Patentansprüche

**1.** Sekundäre Lithium-Ionen-Zelle mit den Merkmalen
a. die Zelle umfasst einen bandförmigen Elektroden-Separator-Verbund (104) mit der Sequenz Anode (120) / Separator (118) / Kathode (130),
b. die Anode (120) umfasst einen bandförmigen Anodenstromkollektor (115) mit einem ersten Längsrand (115a) und einem zweiten Längsrand,
c. der Anodenstromkollektor (115) weist einen streifenförmigen Hauptbereich (122), der mit einer Schicht aus negativem Elektrodenmaterial (155) beladen ist, sowie einen freien Randstreifen (121), der sich entlang des ersten Längsrands (115a) erstreckt und der nicht mit dem Elektrodenmaterial (155) beladen ist, auf,
d. die Kathode (130) umfasst einen bandförmigen Kathodenstromkollektor (125) mit einem ersten Längsrand (125a) und einem zweiten Längsrand,
e. der Kathodenstromkollektor (125) weist einen streifenförmigen Hauptbereich (116), der mit einer Schicht aus positivem Elektrodenmaterial (123) beladen ist, sowie einen freien Randstreifen (117), der sich entlang des ersten Längsrands (115e) erstreckt und der nicht mit dem Elektrodenmaterial (125) beladen ist, auf,
f. der Elektroden-Separator-Verbund (104) liegt in Form eines Wickels mit zwei endständigen Stirnseiten (104b, 104c) vor,
g. die Elektroden-Separator-Verbund (104) ist von einem Gehäuse umschlossen,
h. die Anode (120) und die Kathode (130) sind derart ausgebildet und/oder innerhalb des Elektroden-Separator-Verbunds (104) zueinander angeordnet, dass der erste Längsrand (115a) des Anodenstromkollektors (115) aus einer der endständigen Stirnseiten und der erste Längsrand (125a) des Kathodenstromkollektors (125) aus der anderen der endständigen Stirnseiten austritt,
i. die Zelle weist ein metallisches Kontaktelement (111) auf, das mit einem der ersten Längsränder (115a, 125a) in unmittelbarem Kontakt steht, und
j. das Kontaktelement (111) ist mit diesem Längsrand (115a, 125a) durch Verschweißung verbunden,
sowie dem zusätzlichen kennzeichnenden Merkmal
k. die Schicht aus dem negativen Elektrodenmaterial (155) umfasst metallisches Lithium.

**2.** Zelle nach Anspruch 1 mit den folgenden zusätzlichen Merkmalen:
a. Die Schicht aus dem negativen Elektrodenmaterial (155) umfasst eine poröse, elektrisch leitfähige Matrix mit offenporiger Struktur.
b. In die Poren der Matrix ist das metallische Lithium eingelagert.

**3.** Zelle nach Anspruch 2 mit den folgenden zusätzlichen Merkmalen:
a. Die Matrix weist eine Porosität im Bereich von 40 bis 95 % auf.
b. Die Poren in der Matrix zeichnen sich durch einen mittleren Durchmesser im Bereich von 2 bis 50 µm aus.

**3.** Zelle nach Anspruch 1 oder nach Anspruch 2 mit mindestens einem der folgenden zusätzlichen Merkmale:
a. Die Matrix umfasst Kohlenstoff, der durch Carbonisierung einer organischen Verbindung gebildet wurde.
b. Die Matrix umfasst den Kohlenstoff in einem Anteil im Bereich von 50 bis 100 Gew-%.
c. Die Matrix enthält neben dem Kohlenstoff mindestens einen Füllstoff, der eine höhere oder eine niedrigere elektrische Leitfähigkeit als der Kohlenstoff aufweist.
d. Bei dem Füllstoff handelt es sich um mindestens ein Mitglied aus der Gruppe mit Ruß, CNT, Graphen und Metallpartikel.

**4.** Zelle nach Anspruch 1 oder nach Anspruch 2 mit mindestens einem der folgenden zusätzlichen Merkmale:
a. Die Schicht aus dem negativen Elektrodenmaterial (155) auf dem Anodenstromkollektor (115) weist eine Dicke im Bereich von 5 bis 100 µm auf.

**5.** Zelle nach einem der vorhergehenden Ansprüche mit mindestens einem der folgenden zusätzlichen Merkmale:
a. Das positive Elektrodenmaterial (123) umfasst als Aktivmaterial mindestens eine zur reversiblen Ein- und Auslagerung von Lithium befähigte Metalloxidverbindung, bevorzugt mindestens eine oxidische Cobalt- und/oder Manganverbindung, insbesondere NMC, NCA oder NMCA.
b. Die mindestens eine zur reversiblen Ein- und Auslagerung von Lithium befähigte Metalloxidverbindung ist in dem Elektrodenmaterial (123) in einem Anteil von 80 Gew.-% bis 99 Gew.-% enthalten.
c. Das positive Elektrodenmaterial (123) umfasst einen Elektrodenbinder und/oder ein Leitmittel.
d. Der Elektrodenbinder ist in dem positiven Elektrodenmaterial (123) in einem Anteil von 0,5 Gew.-% bis 15 Gew.-% enthalten.
e. Das Leitmittel ist in dem positiven Elektrodenmaterial (123) in einem Anteil von 0,1 Gew.-% bis 15 Gew.-% enthalten.

**6.** Zelle nach einem der Ansprüche 1 bis 4 mit den folgenden zusätzlichen Merkmalen:
a. Die Schicht aus dem positiven Elektrodenmaterial (123) umfasst eine poröse, elektrisch leitfähige Matrix mit offenporiger Struktur.
b. In diese Matrix ist Schwefel eingelagert.

**7.** Zelle nach einem der vorhergehenden Ansprüche mit mindestens einem der folgenden zusätzlichen Merkmale:
a. Die Zelle umfasst einen Elektrolyten, der eine Mischung aus Tetrahydrofuran (THF) und 2-Methyltetrahydrofuran (mTHF) umfasst.
b. Das Volumenverhältnis von THF : zu mTHF in der Mischung liegt im Bereich von 2 : 1 bis 1: 2, besonders bevorzugt beträgt es 1 : 1.
c. Die Zelle umfasst einen Elektrolyten, der Lithiumhexafluorophosphat (LiPF6) als Leitsalz umfasst.
d. Das Leitsalz in einem Anteil von 1,5 bis 2,5 M, insbesondere von 2 M, in dem Elektrolyten enthalten.

**8.** Zelle nach einem der Ansprüche 1 bis 6 mit mindestens einem der folgenden zusätzlichen Merkmale:
a. Die Zelle umfasst einen Elektrolyten, der eine Mischung aus Ethylencarbonat (EC) und Dimethylcarbonat (DMC) umfasst.
b. Das Volumenverhältnis von EC: zu DMC in der Mischung liegt im Bereich von 1: 7 bis 5: 7, besonders bevorzugt beträgt es 3: 7.
c. Die Zelle umfasst einen Elektrolyten, der LiPF₆ als Leitsalz umfasst.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

**9.** Zelle nach einem der Ansprüche 1 bis 6 mit mindestens einem der folgenden zusätzlichen Merkmale:
a. Die Zelle umfasst einen Elektrolyten, der eine Mischung aus Ethylencarbonat (EC), Dimethylcarbonat (DMC) und Methylacetat (MA) umfasst.
b. Der Volumenanteil von EC und MA in der Mischung liegt jeweils im Bereich von 20 Vol.-% bis 40 Vol.-% und der Volumenanteil an DMC in der Mischung liegt im Bereich von 30 Vol.-% bis 50 Vol.-%.
c. Die Zelle umfasst einen Elektrolyten, der LiPF₆ als Leitsalz umfasst.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

**10.** Zelle nach einem der Ansprüche 1 bis 6 mit mindestens einem der folgenden zusätzlichen Merkmale:
a. Die Zelle umfasst einen Elektrolyten, der eine Mischung aus 1,3-Dioxolan (DOL) und Dimethoxyethan (DME) umfasst.
b. Das Volumenverhältnis von DOL : zu DME in der Mischung liegt im Bereich von 2 : 1 bis 1 : 2, besonders bevorzugt beträgt es 1 : 1.
c. Die Zelle umfasst einen Elektrolyten, der Lithium-bis-(trifluoromethan)sulfonylimid (LiTFSI) als Leitsalz umfasst.
d. Das Leitsalz ist in einer Konzentration von 0,5 bis 2,0 M, insbesondere von 1 M, in dem Elektrolyten enthalten.

**11.** Zelle nach einem der Ansprüche 1 bis 6 mit mindestens einem der folgenden zusätzlichen Merkmale:
a. Die Zelle umfasst einen Elektrolyten, der mindestens ein Lösungsmittel aus der Gruppe mit Acetonitril (AN), Propylencarbonat (PC), Tetrahydrofuran (THF), Dimethylcarbonat (DMC), Diethylcarbonat (DEC), Ethylmethylcarbonat (EMC), Ethylencarbonat (EC), Vinylcarbonat (VC) und Fluoroethylencarbonat (FEC) umfasst.
b. In dem Elektrolyten gelöst ist mindestens eine Verbindung aus der Gruppe mit Fluoromethan (FM), Difluoromethan (DFM), Fluoroethan (FE), 1,1-Difluoroethan (1,1-DFE), 1,1,1,2-Tetrafluoroethan (1,1,1,2-TFE), und 2-Fluoropropan (2-FP).
c. Die Zelle umfasst einen Elektrolyten, der Lithium-bis-(trifluoromethan)sulfonylimid (LiTFSI) als Leitsalz umfasst.
d. Das Leitsalz ist in einer Konzentration von 0,5 bis 2,0 M, insbesondere von 1,2 M, in dem Elektrolyten enthalten.

**12.** Zelle nach einem der Ansprüche 1 bis 6 mit mindestens einem der folgenden zusätzlichen Merkmale:
a. Die Zelle umfasst einen Elektrolyten, der mindestens ein Lösungsmittel aus der Gruppe mit Propylencarbonat (PC), Dimethoxyethan (DME), Acetonitril (AN), Dimethylsulfoxid (DMSO), Tetrahydrofuran (THF), Sulfolan (SL) und Ethylacetat (EA) umfasst.
b. Der Elektrolyten umfasst ein Leitsalz in einem Anteil von 2,5 bis 6,0 Mol.
c. Das Leitsalz ist LiTFSI.
